# EUROPEAN PATENT APPLICATION

(11) **EP 4 772 484 A1**
(43) Date of publication of application: **08.07.2026**
(21) Application number: 24859137.2
(22) Date of filing: 28.06.2024
(51) Int. Cl.: C03C 27/06, E06B 3/67, E06B 3/677

(54) **METHOD FOR MANUFACTURING GLASS PANEL UNIT**

(30) Priority: 31.08.2023 JP 2023141768
(71) Applicant: Panasonic Housing Solutions Co., Ltd., Kadoma-shi, Osaka 571-8686 (JP)
(72) Inventor: SHIMIZU, Takeshi, Kadoma-shi, Osaka 571-0057 (JP); NONAKA, Masataka, Kadoma-shi, Osaka 571-0057 (JP); HASEGAWA, Kazuya, Kadoma-shi, Osaka 571-0057 (JP); OTAKE, Shohei, Kadoma-shi, Osaka 571-0057 (JP); URIU, Eiichi, Kadoma-shi, Osaka 571-0057 (JP); ISHIBASHI, Tasuku, Kadoma-shi, Osaka 571-0057 (JP); KOSUGI, Naoki, Kadoma-shi, Osaka 571-0057 (JP); ABE, Hiroyuki, Kadoma-shi, Osaka 571-0057 (JP)
(74) Representative: Müller-Boré & Partner Patentanwälte PartG mbB
(86) International application number: PCT/JP2024/023675
(87) International publication number: WO 2025/047091

(57) **Abstract**

Provided is a manufacturing method designed to reduce, when first and second glass panes are bonded together by irradiating a thermally meltable peripheral wall with an infrared ray with an assembly including the two glass panes and the peripheral wall clamped with a clip, the chances of causing a bonding failure during a manufacturing process of a glass panel unit. The manufacturing method includes providing an assembly 100 and placing a plurality of clips 1 on the assembly 100. The method further includes bonding the first glass pane 200 and the second glass pane 300 together by irradiating the peripheral wall 410 of the assembly 100 with an infrared ray. The assembly 100 is clamped between a first member 4A and a second member 4B of each of the clips 1. An elastic mechanism 5 of the clip 1 applies elastic force to the first member 4A and the second member 4B. A contact portion 6 comes into contact with the assembly 100 only at a position opposite from an outer periphery of the assembly 100 with respect to the peripheral wall 410. A linking portion 8 includes a transmitting portion 81 having infrared transmittance.

## Description

### Technical Field

The present disclosure generally relates to a method for manufacturing a glass panel unit. More particularly, the present disclosure relates to a method for manufacturing a glass panel unit including two glass panels and a peripheral wall interposed between the two glass panels.

### Background Art

Patent Literature 1 discloses a vacuum insulation member including: a first base member; a second base member arranged to face the first base member with a space left between them; and a sealing portion provided along the peripheral edges of an internal space created between the first base member and the second base member. In the vacuum insulation member, the sealing portion includes a glass phase and a metal phase. The metal phase is provided closer to the internal space than the glass phase is. Patent Literature 1 discloses a method for manufacturing the vacuum insulation member, which includes hermetically sealing a peripheral edge portion with a sealant by loading an assembly of the first and second base members that are fixed to each other with a heat resistant clip into a chamber of a vacuum heating furnace, to which a vacuum pump is connected, and heating the assembly. Patent Literature 1 teaches using an infrared lamp for heating.

### Citation List

### Patent Literature

Patent Literature 1: JP 2018-058709 A

### Summary of Invention

The problem to be overcome by the present disclosure is to provide a method for manufacturing a glass panel unit which is designed to reduce, when two glass panes are being bonded together by irradiating a thermally meltable peripheral wall with an infrared ray with an assembly including the two glass panes and the peripheral wall clamped with a clip, the chances of causing a bonding failure during the manufacturing process of the glass panel unit.

A method for manufacturing a glass panel unit according to an aspect of the present disclosure includes providing an assembly. The assembly includes: a first glass pane; a second glass pane facing the first glass pane; and a peripheral wall interposed between the first glass pane and the second glass pane which contains a thermally meltable sealant disposed in a frame shape along respective outer peripheries of the first glass pane and the second glass pane. The first glass pane has a first outer surface facing away from the second glass pane. The second glass pane has a second outer surface facing away from the first glass pane. The method further includes placing a plurality of clips along an outer peripheral edge of the assembly to cause each of the plurality of clips to clamp the assembly. The method further includes bonding the first glass pane and the second glass pane together with the peripheral wall by irradiating the peripheral wall with an infrared ray. Each of the plurality of clips includes a first member, a second member, and an elastic mechanism. The assembly is clamped, in a placed state where the plurality of clips are placed on the assembly, between the first member and the second member such that the first member is brought into contact with the first outer surface and that the second member is brought into contact with the second outer surface. The elastic mechanism applies elastic force to the first member and the second member to clamp the assembly. Each of the first member and the second member has: a base portion linked to the elastic mechanism; and an action portion linked to the base portion. The action portion includes: a contact portion coming into contact with the assembly in the placed state; and a linking portion keeping out of contact with the assembly in the placed state and interposed between the contact portion and the base portion. In either the action portion of the first member or the action portion of the second member or each of the respective action portions of the first and second members, the contact portion comes into contact with the assembly only at a position opposite from an outer periphery of the assembly with respect to the peripheral wall and the linking portion includes a transmitting portion having infrared transmittance.

### Brief Description of Drawings

[FIG. 1] FIG. 1 is a plan view of a first member of a clip according to an exemplary embodiment;
[FIG. 2] FIG. 2 is a side view of the first member of the clip according to the exemplary embodiment;
[FIG. 3] FIG. 3 is a plan view of a second member of the clip according to the exemplary embodiment;
[FIG. 4] FIG. 4 is a side view of the second member of the clip according to the exemplary embodiment;
[FIG. 5] FIG. 5A is a side view of the clip according to the exemplary embodiment, and FIG. 5B is a partially cutaway side view of the clip according to the exemplary embodiment;
[FIG. 6] FIG. 6 is a plan view of a glass panel unit assembly according to the exemplary embodiment;
[FIG. 7] FIG. 7 is a cross-sectional view taken along the plane A-A shown in FIG. 6;
[FIG. 8] FIG. 8 illustrates a placing process step of a manufacturing method according to the exemplary embodiment;
[FIG. 9] FIG. 9 illustrates the placing process step of the manufacturing method;
[FIG. 10] FIG. 10 illustrates a bonding process step of the manufacturing method;
[FIG. 11] FIG. 11 is a plan view of a glass panel unit according to the exemplary embodiment;
[FIG. 12] FIG. 12 is a cross-sectional view taken along the plane B-B shown in FIG. 11;
[FIG. 13] FIG. 13 is a side view of a clip according to one variation;
[FIG. 14] FIG. 14 is a perspective view of the clip according to the variation;
[FIG. 15] FIG. 15 is a cross-sectional view of a main part according to one variation;
[FIG. 16] FIG. 16 is a cross-sectional view of the main part according to the variation;
[FIG. 17] FIG. 17 illustrates a bonding process step of a manufacturing method according to the variation;
[FIG. 18] FIG. 18 illustrates a bonding process step of a manufacturing method according to one variation; and
[FIG. 19] FIG. 19 illustrates a bonding process step of a manufacturing method according to one variation.

### Description of Embodiments

An exemplary embodiment and its variations will be described with reference to the accompanying drawings. Note that the embodiment and its variations to be described below are only an exemplary one of various embodiments of the present disclosure and its variations and should not be construed as limiting. Rather, the exemplary embodiment and its variations may be readily modified in various manners depending on a design choice or any other factor without departing from the scope of the present disclosure. Optionally, configurations according to the variations may be adopted in combination as appropriate.

The drawings to be referred to in the following description of embodiments are all schematic representations. Thus, the ratio of the dimensions of respective constituent elements illustrated on the drawings does not always reflect their actual dimensional ratio.

### 1. Embodiment

A method for manufacturing a glass panel unit 10 (hereinafter simply referred to as a "manufacturing method") according to an exemplary embodiment includes providing an assembly 100 (hereinafter referred to as an "assembling process step"). The assembly 100 includes: a first glass pane 200; a second glass pane 300 facing the first glass pane 200; and a peripheral wall 410 interposed between the first glass pane 200 and the second glass pane 300 which contains a thermally meltable sealant disposed in a frame shape along respective outer peripheries of the first glass pane 200 and the second glass pane 300. The first glass pane 200 has a first outer surface 2A facing away from the second glass pane 300. The second glass pane 300 has a second outer surface 2B facing away from the first glass pane 200.

The manufacturing method further includes placing a plurality of clips 1 along an outer peripheral edge of the assembly 100 (hereinafter referred to as a "placing process step") to cause each of the plurality of clips 1 to clamp the assembly 100.

The manufacturing method further includes bonding the first glass pane 200 and the second glass pane 300 together with the peripheral wall 410 (hereinafter referred to as a "bonding process step") by irradiating the peripheral wall 410 with an infrared ray.

Each of the plurality of clips 1 includes a first member 4A, a second member 4B, and an elastic mechanism 5. The assembly 100 is clamped, in a state where the clip 1 is placed on the assembly 100 (hereinafter referred to as a "placed state"), between the first member 4A and the second member 4B such that the first member 4A is brought into contact with the first outer surface 2A and the second member 4B is brought into contact with the second outer surface 2B. The elastic mechanism 5 applies elastic force to the first member 4A and the second member 4B to clamp the assembly 100. Each of the first member 4A and the second member 4B has: a base portion 7 linked to the elastic mechanism 5; and an action portion 9 linked to the base portion 7. The action portion 9 includes: a contact portion 6 coming into contact with the assembly 100 in the placed state; and a linking portion 8 keeping out of contact with the assembly 100 in the placed state and interposed between the contact portion 6 and the base portion 7. In either the action portion 9 of the first member 4A or the action portion 9 of the second member 4B or each of the respective action portions 9 of the first and second members 4A, 4B, the contact portion 6 comes into contact with the assembly 100 only at a position opposite from an outer periphery of the assembly 100 with respect to the peripheral wall 410 and the linking portion 8 includes a transmitting portion 81 having infrared transmittance.

That is to say, either the contact portion 6 (hereinafter referred to as a "contact portion 6A") of the action portion 9 (hereinafter referred to as an "action portion 9A") of the first member 4A or the contact portion 6 (hereinafter referred to as a "contact portion 6B") of the action portion 9 (hereinafter referred to as an "action portion 9B") of the second member 4B or each of the contact portions 6A, 6B comes into contact with the assembly 100 only at such a position opposite from the outer periphery of the assembly 100 with respect to the peripheral wall 410. If the contact portion 6A of the action portion 9A of the first member 4A comes into contact with the assembly 100 only at such a position opposite from the outer periphery of the assembly 100 with respect to the peripheral wall 410, the linking portion 8 (hereinafter referred to as a "linking portion 8A") of the first member 4A includes a transmitting portion 81 (hereinafter referred to as a "transmitting portion 81B") having infrared transmittance. If the contact portion 6B of the action portion 9B of the second member 4B comes into contact with the assembly 100 only at such a position opposite from the outer periphery of the assembly 100 with respect to the peripheral wall 410, the linking portion 8 (hereinafter referred to as a "linking portion 8B") of the second member 4B includes a transmitting portion 81 (hereinafter referred to as a "transmitting portion 81B") having infrared transmittance. Note that if the contact portion 6A of the action portion 9A of the first member 4A comes into contact with the assembly 100 only at such a position opposite from the outer periphery of the assembly 100 with respect to the peripheral wall 410 and the contact portion 6B of the action portion 9B of the second member 4B comes into contact with the assembly 100 only at such a position opposite from the outer periphery of the assembly 100 with respect to the peripheral wall 410, either or each of the linking portion 8A of the first member 4A and the linking portion 8B of the second member 4B may include the transmitting portion 81.

The manufacturing method according to this embodiment makes it easier to keep the relative positions of the first glass pane 200, the second glass pane 300, and the peripheral wall 410 maintained by placing the clip 1 on the assembly 100. This reduces the chances of causing a deviation in the relative positions of respective constituent members of the glass panel unit 10. In addition, while the peripheral wall 410 is being irradiated with an infrared ray, the contact portion 6 comes into contact with the assembly 100 only at a position opposite from the outer periphery of the assembly 100 with respect to the peripheral wall 410, the linking portion 8 is out of contact with the assembly 100, and the linking portion 8 has the transmitting portion 81 in either or each of the first member 4A and second member 4B of the clip 1. This reduces the chances of the clip 1 interfering with irradiating the peripheral wall 410 with the infrared ray. Consequently, the first glass pane 200 and the second glass pane 300 may be bonded together efficiently. In addition, this also reduces the chances of leaving a part which is not sufficiently closed with the peripheral wall 410 between the first glass pane 200 and the second glass pane 300. Consequently, this may reduce the chances of causing various types of defects such as a decrease in the mechanical strength of the glass panel unit 10 and a failure to keep the internal space 500 (to be described later) either in a vacuum condition or a reduced pressure condition.

A manufacturing method according to an exemplary embodiment will be described in further detail.

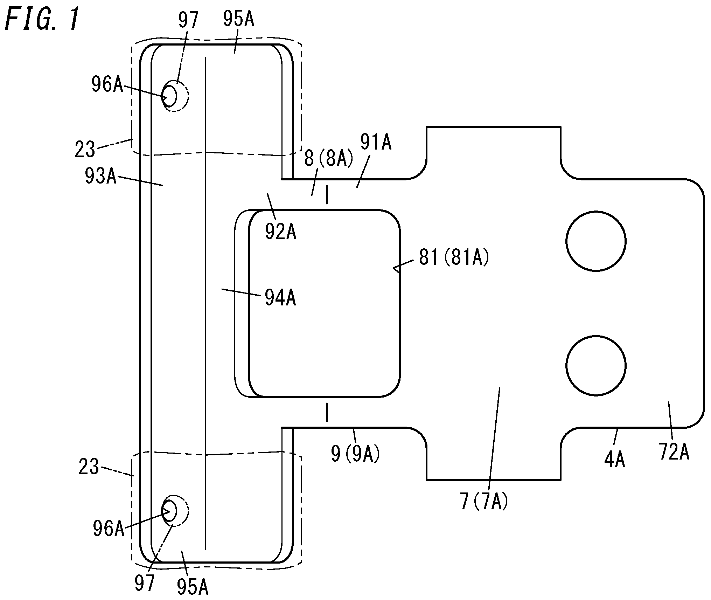

First, the structure of the clip 1 will be described with reference to FIGS. 1-5B.

As described above, the clip 1 includes the first member 4A, the second member 4B, and the elastic mechanism 5. In the placed state where the clip 1 is placed on the assembly 100, the assembly 100 is clamped between the first member 4A and the second member 4B.

In the following description of the clip 1, the first member 4A is defined to be located upward of the second member 4B, and the second member 4B is defined to be located downward of the first member 4A. In addition, in the placed state, the assembly 100 is defined to be located forward of the elastic mechanism 5, and the elastic mechanism 5 is defined to be located backward of the assembly 100. Furthermore, if the upward/downward and forward/backward directions for the observer are supposed to agree with the upward/downward and forward/backward directions in the foregoing description of the clip 1, then the rightward/leftward directions for the observer are defined to be the rightward/leftward directions in the following description of the clip 1. Note that the upward/downward, forward/backward, and rightward/leftward directions are defined as such only for the sake of convenience, not to define, for example, the orientation of the clip 1 when the clip 1 is used.

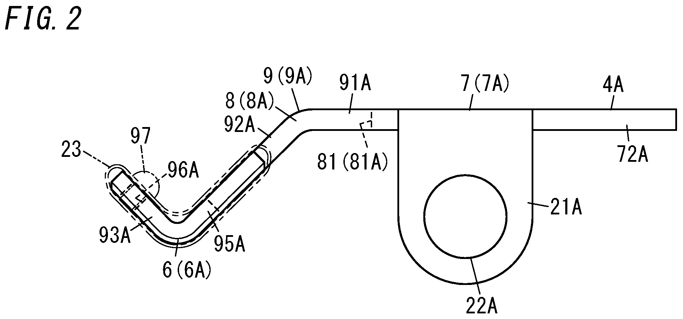

As shown in FIGS. 1 and 2, the first member 4A includes a base portion 7 (hereinafter referred to as a "base portion 7A") linked to the elastic mechanism 5 and an action portion 9 (hereinafter referred to as an "action portion 9A") located forward of the base portion 7A which is linked to the base portion 7A.

The base portion 7A has the shape of a flat plate having thickness in the upward/downward direction.

The first member 4A further includes two connecting portions 21A extending downward from the left and right side edges of the base portion 7A. The base portion 7A is linked to the elastic mechanism 5 via the connecting portions 21A. Each of these connecting portions 21A has a supporting hole 22A which penetrates through the connecting portion 21A in the rightward/leftward direction. The two connecting portions 21A face each other in the rightward/leftward direction and the two supporting holes 22A also face each other in the rightward/leftward direction. As will be described later, the supporting holes 22A support the elastic mechanism 5.

The base portion 7A includes an operating portion 72A backward of the supporting holes 22A, i.e., opposite from the action portion 9A with respect to the elastic mechanism 5.

The action portion 9A includes: a first part 91A extending forward from the front end of the base portion 7A; a second part 92A extending obliquely forward and downward from the front end of the first part 91A with respect to the first part 91A; and a third part 93A extending obliquely forward and upward from the front end of the second part 92A with respect to the second part 92A. Each of the first part 91A, the second part 92A, and the third part 93A has the shape of a flat plate.

The angled portion linking the second part 92A to the third part 93A serves as the contact portion 6A. The combination of the first part 91A and the second part 92A serves as the linking portion 8A interposed between the contact portion 6A and the base portion 7A.

When the first member 4A is viewed in plan from over the first member 4A, the action portion 9A includes a central piece 94A and two side pieces 95A linked to the right and left side edges of a frontend part of the central piece 94A. The side piece 95A linked to the left side edge of the central piece 94A extends to the left from the central piece 94A. The side piece 95A linked to the right side edge of the central piece 94A extends to the right from the central piece 94A. Each side piece 95A includes a portion of the second part 92A, a portion of the third part 93A, and a portion of the contact portion 6A and is bent in a V-shape. Each side piece 95A has a through hole 96A in that portion forming part of the third part 93A.

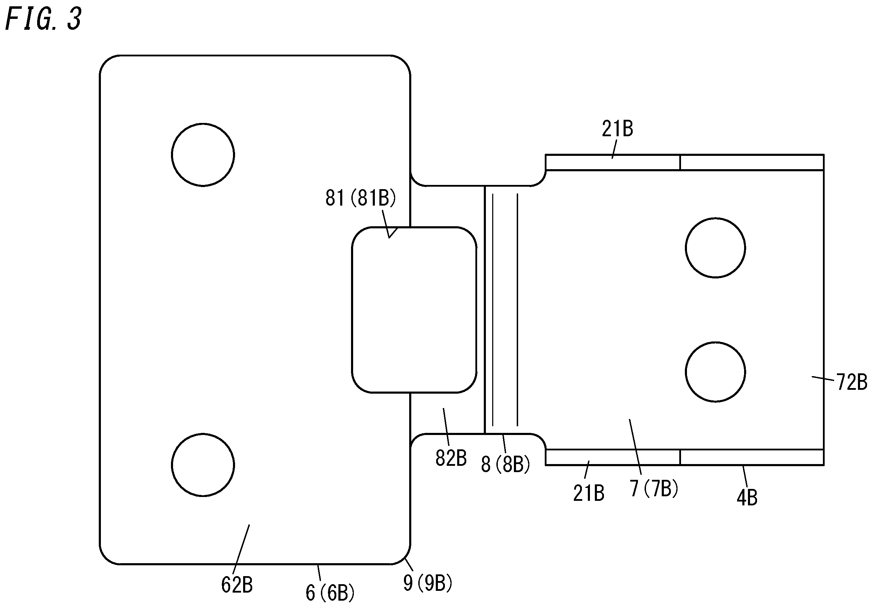

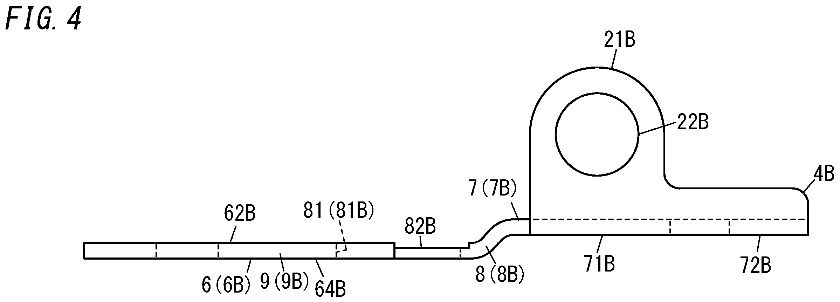

As shown in FIGS. 3 and 4, the second member 4B includes: a base portion 7B linked to the elastic mechanism 5; and an action portion 9 (hereinafter referred to as an "action portion 9B") located forward of the base portion 7 (hereinafter referred to as a "base portion 7B"). The second member 4B is rotatable with respect to the first member 4A. In the following description, the structure of the second member 4B will be described with respect to a reference state where the base portion 7A of the first member 4A and the base portion 7B of the second member 4B are arranged parallel to each other and the contact portion 6A of the first member 4A and the contact portion 6B of the second member 4B are out of contact with each other. Note that in a state where no external force is applied to the first member 4A and the second member 4B, the base portion 7B of the second member 4B is tilted downward toward the front end thereof, and the contact portion 6B of the second member 4B is either in contact with, or in proximity with, the contact portion 6A of the first member 4A.

The base portion 7B has the shape of a flat plate having thickness in the upward/downward direction.

The second member 4B further includes two connecting portions 21B extending upward from the left and right side edges of the base portion 7B. The base portion 7B is linked to the elastic mechanism 5 via the connecting portions 21B. Each of these connecting portions 21B has a supporting hole 22B which penetrates through the connecting portion 21B in the rightward/leftward direction. The two connecting portions 21B face each other in the rightward/leftward direction and the two supporting holes 22B also face each other in the rightward/leftward direction. As will be described later, the supporting holes 22B support the elastic mechanism 5.

The base portion 7B includes an operating portion 72B backward of the supporting holes 22B, i.e., opposite from the action portion 9B with respect to the elastic mechanism 5.

The action portion 9B includes: the contact portion 6B; and the linking portion 8B interposed between the rear end of the contact portion 6B and the front end of the base portion 7B to link the rear end of the contact portion 6B to the front end of the base portion 7B.

The contact portion 6B has the shape of a flat plate having thickness in the upward/downward direction. One surface, facing upward, of the contact portion 6B (i.e., the surface facing toward the assembly 100 in the placed state) is a contact surface 62B as a flat surface.

The linking portion 8B has the shape of a partially curved flat plate having thickness in the upward/downward direction. One surface, facing upward, of the linking portion 8B has a recessed surface 82B. The recessed surface 82B is a surface recessed with respect to the contact surface 62B. The recessed surface 82B forms a recess which is open upward. The recessed surface 82B is a surface covering the action portion 9B from the left end through the right end thereof. Providing the recessed surface 82B may reduce the chances of the outer peripheral edges of the assembly 100 coming into contact with the action portion 9B in the placed state as will be described later. The recess formed by the recessed surface 82B preferably has a depth equal to or greater than 0.2 mm and more preferably has a depth equal to or greater than 0.3 mm. In addition, the depth of the recess may be, for example, at most one half the thickness of the contact portion 6B.

Each of the first member 4A and the second member 4B may be formed by subjecting a metallic plate member to machining, for example.

The first member 4A and the second member 4B are assembled together such that the action portion 9A of the first member 4A and the action portion 9B of the second member 4B face each other in the upward/downward direction, the right connecting portion 21A of the first member 4A and the right connecting portion 21B of the second member 4B are laid one on top of the other, and the left connecting portion 21A of the first member 4A and the left connecting portion 21B of the second member 4B are laid one on top of the other.

In this embodiment, the linking portion 8A of the first member 4A includes the transmitting portion 81A and the linking portion 8B of the second member 4B also includes the transmitting portion 81B. An average width (i.e., an average dimension measured in the rightward/leftward direction) of the transmitting portions 81A, 81B preferably accounts for 50% or more of an average width (i.e., an average dimension measured in the rightward/leftward direction) of the linking portions 8A, 8B including the transmitting portions 81A, 81B. The average width of the respective transmitting portions 81A, 81B is preferably equal to or greater than 10 mm, and more preferably equal to or greater than 15 mm. The remaining parts of the linking portion 8A, 8B which are adjacent to the transmitting portion 81A, 81B on the right and left of the transmitting portion 81A, 81B, respectively, each preferably have a width equal to or less than 5 mm and more preferably have a width equal to or less than 4 mm.

In this embodiment, the linking portion 8A of the first member 4A has an opening serving as the transmitting portion 81A. The transmitting portion 81A penetrates through the linking portion 8A in the upward/downward direction. The transmitting portion 81A is formed to extend from a first part 91A of the linking portion 8A through a second part 92A thereof. The average width (i.e., an average dimension measured in the rightward/leftward direction) of the transmitting portion 81A preferably accounts for 50% or more of the average width (i.e., an average dimension measured in the rightward/leftward direction) of the linking portion 8A. The average width of the transmitting portion 81A is preferably equal to or greater than 10 mm and more preferably equal to or greater than 15 mm. The remaining parts of the linking portion 8A which are adjacent to the transmitting portion 81A on the right and left of the transmitting portion 81A, respectively, each preferably have a width equal to or less than 5 mm and more preferably have a width equal to or less than 4 mm.

In this embodiment, the linking portion 8B of the second member 4B also has an opening serving as the transmitting portion 81B. The transmitting portion 81B penetrates through the linking portion 8B in the upward/downward direction. In this embodiment, the transmitting portion 81B is formed to extend from a part, having the recessed surface 83B, of the linking portion 8B through the contact portion 6B. The average width (i.e., an average dimension measured in the rightward/leftward direction) of the transmitting portion 81B preferably accounts for 70% or more of the average width (i.e., an average dimension measured in the rightward/leftward direction) of the linking portion 8A. The remaining parts of the linking portion 8B which are adjacent to the transmitting portion 81B on the right and left of the transmitting portion 81B, respectively, each preferably have a width equal to or less than 5 mm and more preferably have a width equal to or less than 4 mm.

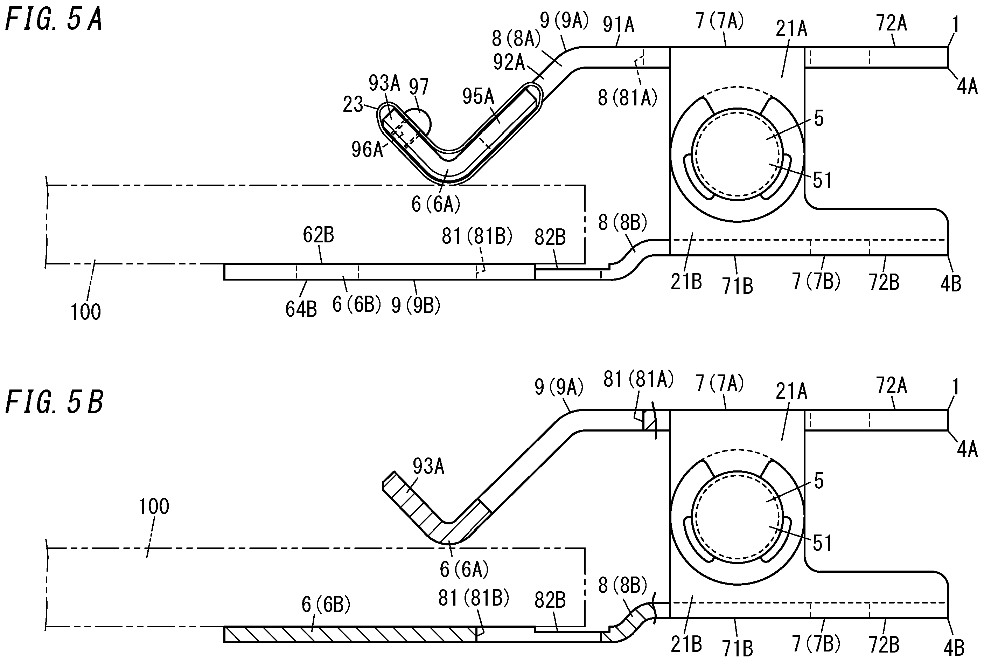

As shown in FIGS. 5A and 5B, the elastic mechanism 5 includes a center shaft 51 and a torsion coil spring wound around the center shaft 51. The center shaft 51 has the shape of a column having length in the rightward/leftward direction. The left end portion of the center shaft 51 is passed through the supporting hole 22A of the left connecting portion 21B of the first member 4A and the supporting hole 22B of the left connecting portion 21B of the second member 4B. The right end portion of the center shaft 51 is passed through the supporting hole 22A of the right connecting portion 21A of the first member 4A and the supporting hole 22B of the right connecting portion 21B of the second member 4B. This allows the first member 4A to pivot on the center shaft 51 with respect to the second member 4B. The torsion coil spring applies elastic force to the first member 4A and the second member 4B to clamp the assembly 100 between them. That is to say, the torsion coil spring applies elastic force to the first member 4A and the second member 4B to cause the first member 4A to rotate with respect to the second member 4B and thereby bring the action portion 9A of the first member 4A closer toward the action portion 9B of the second member 4B.

If the clip 1 is not in the placed state and no external force is applied to the clip 1, causing the elastic mechanism 5 to apply the elastic force to the first member 4A and the second member 4B brings the contact portion 6A of the first member 4A into contact with, or in proximity with, the contact portion 6B of the second member 4B.

Optionally, the clip 1 may include a shock absorber 23 covering the contact portion 6A of the first member 4A as shown in FIGS. 1, 2, 5A, and 5B. The shock absorber 23 may be, for example, a member formed in a ring shape out of a resin sheet. The shock absorber 23 is attached to each of the two side pieces 95A of the action portion 9A of the first member 4A. The shock absorber 23 is attached to each side piece 95A to wrap around the side piece 95A, thereby covering the contact portion 6A with the shock absorber 23. Attaching a fastening member 97 such as a screw to the side piece 95A such that the fastening member 97 passes through the shock absorber 23 and the through hole 96A of the side piece 95A may reduce the chances of the shock absorber 23 coming off the side piece 95A.

The contact portion 6A of the first member 4A has an angled shape. Thus, the pressure applied by the contact portion 6A of the first member 4A to the assembly 100 may be greater than the pressure applied by the contact portion 6B of the second member 4B to the assembly 100. However, covering the contact portion 6A of the first member 4A with the shock absorber 23 causes the contact portion 6A to contact with the assembly 100 via the shock absorber 23. This may reduce the damage that would be done to the assembly 100 due to the pressure applied by the contact portion 6A of the first member 4A to the assembly 100.

Next, an exemplary method for manufacturing a glass panel unit 10 using the clip 1 will be described.

As described above, a manufacturing method according to this embodiment includes an assembling process step. The assembling process step includes providing an assembly 100. As described above, the assembly 100 includes: a first glass pane 200; a second glass pane 300 facing the first glass pane 200; and a peripheral wall 410 interposed between the first glass pane 200 and the second glass pane 300 which contains a thermally meltable sealant disposed in a frame shape along respective outer peripheries of the first glass pane 200 and the second glass pane 300. The first glass pane 200 has a first outer surface 2A facing away from the second glass pane 300. The second glass pane 300 has a second outer surface 2B facing away from the first glass pane 200.

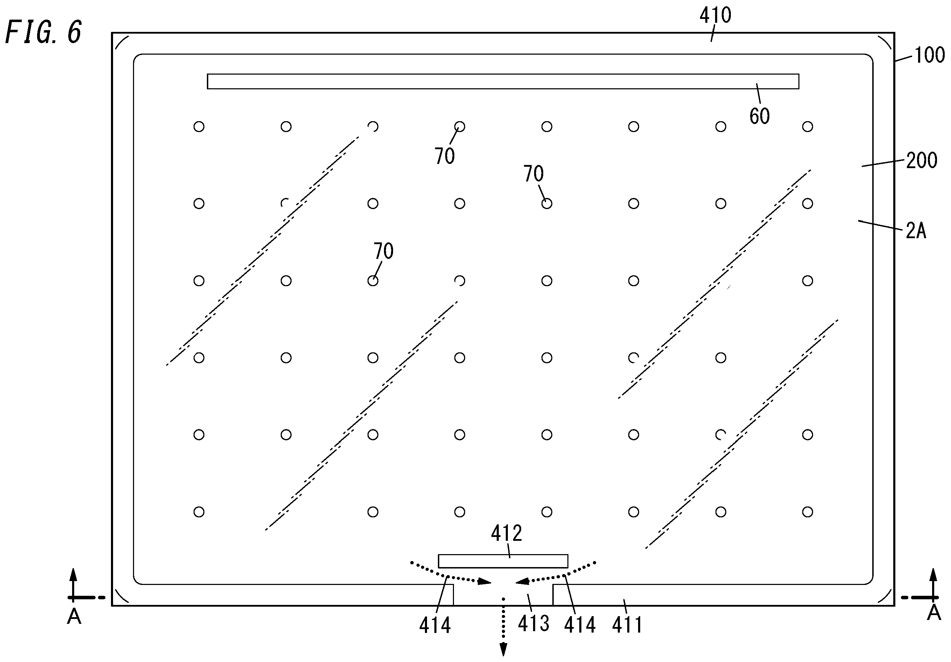

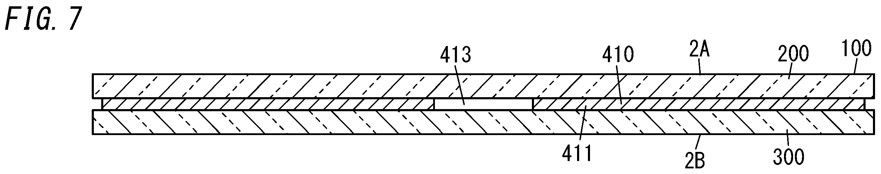

Details of the assembly 100 will be described. FIGS. 6 and 7 illustrate an assembly 100 according to this embodiment. As shown in FIGS. 6 and 7, the assembly 100 includes the first glass pane 200, the second glass pane 300, the peripheral wall 410, and an internal space 500. The assembly 100 further includes a gas adsorbent 60 and a plurality of pillars 70.

The first glass pane 200 is a member that forms the basis of a first glass panel 20 of the glass panel unit 10. The second glass pane 300 is a member that forms the basis of a second glass panel 30 of the glass panel unit 10. The first and second glass panes 200, 300 have the same shape. Each of the first and second glass panes 200, 300 has the shape of a rectangular flat plate. Examples of materials for the first glass pane 200 and the second glass pane 300 include soda lime glass, high strain point glass, chemically tempered glass, alkali-free glass, quartz glass, Neoceram, and thermally tempered glass. Optionally, the surface of the first glass pane 200 and/or the second glass pane 300 may be provided with a coating.

The peripheral wall 410 is interposed between the first glass pane 200 and the second glass pane 300. The peripheral wall 410 is a member which will be a frame member 40 of the glass panel unit 10. The peripheral wall 410 has a frame shape as shown in FIG. 6. In particular, the peripheral wall 410 has a rectangular frame shape. The peripheral wall 410 is formed along the respective outer peripheries of the first and second glass panes 200, 300. Thus, an internal space 500 surrounded by the peripheral wall 410, the first glass pane 200, and the second glass pane 300 is created in the assembly 100. In the assembly 100, the peripheral wall 410 does not perform the function of bonding the first glass pane 200 and the second glass pane 300 together. The peripheral wall 410 contains a thermally meltable sealant.

The sealant includes a glass frit, for example. The glass frit may be a low-melting glass frit, for example. Examples of the low-melting glass frits include a bismuth-based glass frit, a lead-based glass frit, and a vanadium-based glass frit.

The peripheral wall 410 may further contain core members. The core members are used to define the height of the frame member 40. The core members may be, for example, spherical glass beads. The diameter of the glass beads is selected according to the height of the frame member 40. Such core members are dispersed in the sealant at a predetermined ratio. For example, glass beads having a diameter of 50 µm to 300 µm are included at a ratio of 0.01% by mass to 1% by mass (corresponding to 0.03% by volume to 3% by volume) with respect to the sealant.

Optionally, the peripheral wall 410 may contain a binder. The binder may be a resin, for example. The binder may improve the applicability and formability of the sealant.

The peripheral wall 410 may contain a solvent. The solvent may be an organic solvent, for example.

The peripheral wall 410 includes: a main part 411 which forms the majority of the peripheral wall 410; and a sealing portion 412. The main part 411 has an opening 413. The opening 413 forms part of the outer peripheral edges of the first glass pane 200 and the second glass pane 300 where the main part 411 is cut out locally. The sealing portion 412 is disposed in the internal space 500 to be located inside the opening 413. The sealing portion 412 is arranged in the vicinity of the opening 413 to face the opening 413. A gap 414 is left between each end of the sealing portion 412 and the main part 411. Thus, two gaps 414 are left for the peripheral wall 410. These gaps 414 allow the internal space 500 to communicate with the external space outside the assembly 100.

The gas adsorbent 60 is placed in the internal space 500. Specifically, the gas adsorbent 60 has an elongate flat-plate shape and is provided on the second glass pane 300, for example. The gas adsorbent 60 is used to adsorb unnecessary gases (such as a residual gas) during the manufacturing process of the glass panel unit 10. The unnecessary gases may be, for example, gases emitted from the sealant when the sealant forming the peripheral wall 410 is heated. The gas adsorbent 60 includes a getter material, for example. The getter material is a material having the property of adsorbing molecules smaller in size than a predetermined one. The getter material may be an evaporative getter material, for example. The evaporative getter material has the property of releasing adsorbed molecules when heated to a predetermined temperature (activation temperature) or more. This allows, even if the adsorption ability of the evaporative getter material deteriorates once, the evaporative getter material to recover its adsorption ability by being heated to the activation temperature or more. The evaporative getter material may be a zeolite or an ion-exchanged zeolite (such as a copper ion exchanged zeolite), for example. The gas adsorbent 60 includes a powder of this getter material. Specifically, the gas adsorbent 60 may be formed by applying a liquid including a powder of the getter material (such as a dispersion liquid prepared by dispersing a powder of the getter material in a liquid or a solution prepared by dissolving a powder of the getter material in a liquid) and solidifying the liquid. This reduces the size of the gas adsorbent 60, thus allowing the gas adsorbent 60 to be placed even when the internal space 500 is narrow.

The plurality of pillars (spacers) 70 are placed in the internal space 500. The plurality of pillars 70 are used to maintain a predetermined gap distance between the first glass pane 200 and the second glass pane 300. The size, number, spacing, and placement pattern of the pillars 70 may be selected appropriately. Each pillar 70 has a columnar shape. Each pillar 70 may have a diameter of 1 mm and a height of 100 µm, for example. Alternatively, each pillar 70 may also have any other appropriate shape such as a prismatic shape or a spherical shape. Furthermore, each pillar 70 may be made of a material such as a metallic material, a ceramic material, or a resin as long as the material can withstand the temperature in the bonding process step to be described later.

When manufacturing the assembly 100, the peripheral wall 410, the gas adsorbent 60, and the plurality of pillars 70 are formed on the second glass pane 300, for example. Thereafter, the first glass pane 200 is arranged to face the second glass pane 300. Then, the first glass pane 200 is brought into contact with the peripheral wall 410, thereby manufacturing the assembly 100. The peripheral wall 410 is formed by applying, using any coater such as a dispenser, a composition containing constituent components (such as the sealant) of the peripheral wall 410 onto the second glass pane 300. The pillars 70 are placed onto the second glass pane 300 using a chip mounter, for example. Alternatively, the pillars 70 may also be formed by photolithographic and etching techniques. Still alternatively, the pillars 70 may also be formed by a thin film forming technique. The gas adsorbent 60 is formed by applying, using a dispenser, for example, a solution in which a powder of the getter material is dispersed, onto a predetermined position on the second glass pane 300 and then drying the solution.

As described above, the manufacturing method according to this embodiment includes a placing process step. The placing process step includes placing a plurality of clips 1 along an outer peripheral edge of the assembly 100 to cause each of the plurality of clips 1 to clamp the assembly 100. The plurality of clips 1 are preferably arranged at intervals along the entire outer peripheral edges of the assembly 100 to surround the assembly 100.

When each of the clips 1 is placed, the user applies force to the two operating portions 72A, 72B of the clip 1 by, for example, pinching the two operating portions 72A, 72B with his or her fingers such that the two operating portions 72A, 72B are brought closer to each other. Applying this force causes the first member 4A to rotate with respect to the second member 4B by overcoming the elastic force applied by the elastic mechanism 5, thus separating the action portion 9A of the first member 4A from the action portion 9B of the second member 4B and thereby leaving a gap between the contact portion 6A of the first member 4A and the contact portion 6B of the second member 4B. In this state, the action portion 9A of the first member 4A and the first outer surface 2A of the first glass pane 200 are arranged to face each other and the action portion 9B of the second member 4B and the second outer surface 2B of the second glass pane 300 are also arranged to face each other at the outer peripheral edge of the assembly 100. When the user removes, in this state, the force that has been applied to the operating portions 72A, 72B in this state, the action portion 9A of the first member 4A is caused to rotate toward the action portion 9B of the second member 4B under the elastic force applied by the elastic mechanism 5 to the second member 4B. As a result, the contact portion 6A of the first member 4A and the contact portion 6B of the second member 4B are respectively brought into contact with the first outer surface 2A and second outer surface 2B of the assembly 100, whereby the assembly 100 is clamped between the contact portion 6A of the first member 4A and the contact portion 6B of the second member 4B. Consequently, the clip 1 is placed on the assembly 100. That is to say, the placed state is established.

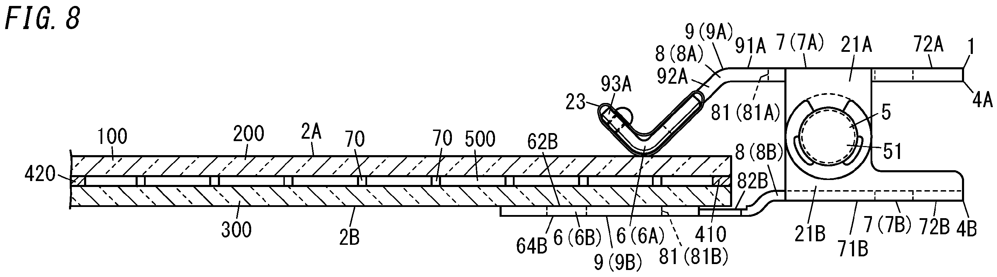

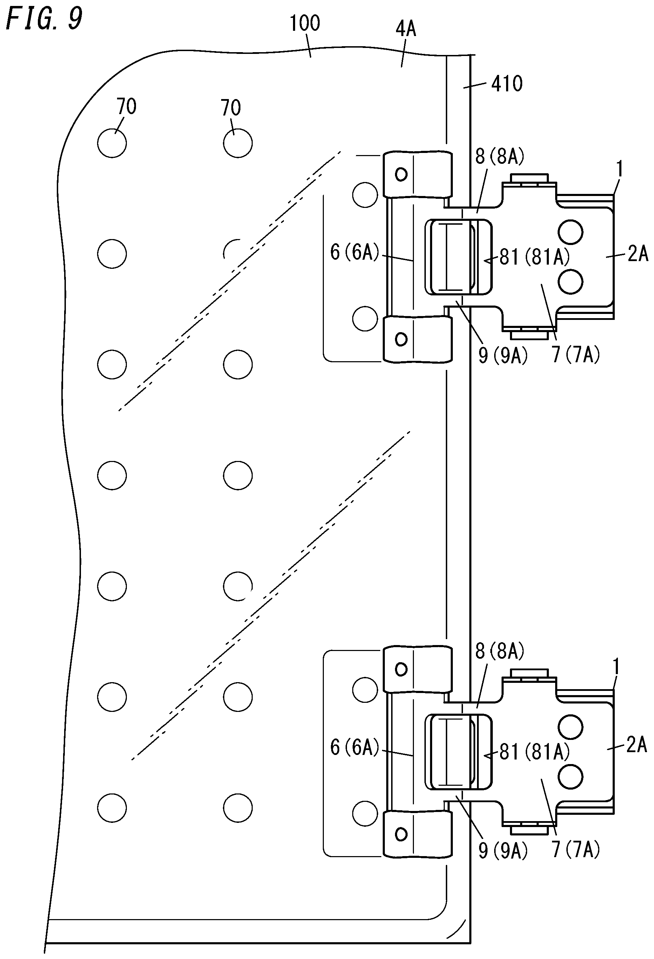

As shown in FIGS. 8 and 9, in the placed state, the contact portion 6A of the first member 4A is placed forward of the peripheral wall 410 at the outer peripheral edge of the assembly 100, thereby bringing the contact portion 6A into contact with the assembly 100 only at a position opposite from the outer periphery of the assembly 100 with respect to the peripheral wall 410. That is to say, the peripheral wall 410 and the contact portion 6A are separated from each other in the forward/backward direction. As a result, a gap is left in the upward/downward direction between the linking portion 8A of the action portion 9A of the first member 4A and the assembly 100, and no parts of the first member 4A but the contact portion 6A are in contact with the assembly 100. In addition, the peripheral wall 410 at the outer peripheral edge of the assembly 100 and the transmitting portion 81A of the linking portion 8A of the first member 4A face each other in the upward/downward direction.

In addition, in the placed state, the contact portion 6B of the second member 4B is placed forward of the peripheral wall 410 at the outer peripheral edge of the assembly 100, thereby bringing the contact portion 6B into contact with the assembly 100 only at a position opposite from the outer periphery of the assembly 100 with respect to the peripheral wall 410. That is to say, the peripheral wall 410 and the contact portion 6B are separated from each other in the forward/backward direction. The recessed surface 82B of the linking portion 8B is arranged to face the outer peripheral portion of the assembly 100. As a result, a gap is left in the upward/downward direction between the linking portion 8B of the action portion 9B of the second member 4B and the assembly 100, and no parts of the second member 4B but the contact portion 6B are in contact with the assembly 100. In addition, the peripheral wall 410 at the outer peripheral edge of the assembly 100 and the transmitting portion 81B of the linking portion 8B of the second member 4B face each other in the upward/downward direction.

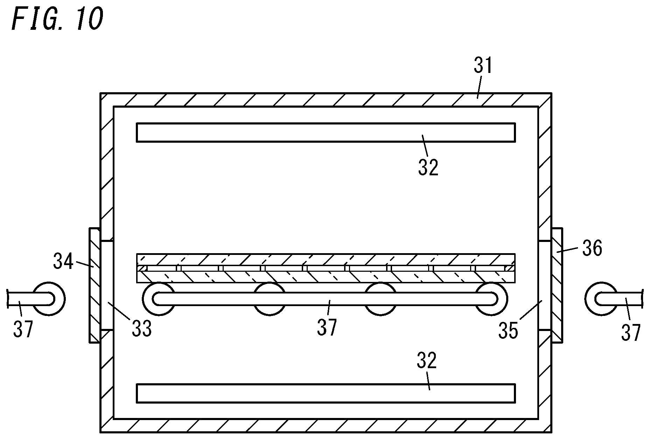

As described above, the manufacturing method according to this embodiment further includes the bonding process step of bonding the first glass pane 200 and the second glass pane 300 together with the peripheral wall 410 by irradiating the peripheral wall 410 with an infrared ray. The bonding process step includes using an infrared heating device such as the one shown in FIG. 10. The infrared heating device includes a vacuum chamber 31 and an infrared light source 32 installed in the vacuum chamber 31. The vacuum chamber 31 is a chamber which may reduce the pressure in the internal space using a vacuum pump, for example. The vacuum chamber 31 includes an inlet 33, an outlet 35, a door 34 for opening and closing the inlet 33, and a door 36 for opening and closing the outlet 35. Inside the vacuum chamber 31, installed is a carrier 37 for supporting and carrying the assembly 100 between the inlet 33 and the outlet 35. In addition, two other carriers 37 for carrying the assembly 100 are respectively installed outside the inlet 33 of the vacuum chamber 31 and outside the outlet 35 of the vacuum chamber 31. Each of these carriers 37 may be a roller conveyor, for example. The infrared light source 32 may be, for example, a planar infrared lamp. For example, two infrared light sources 32 may be respectively arranged over and under the carrier 37 inside the vacuum chamber 31.

With the door 34 of the inlet 33 of the vacuum chamber 31 opened, the assembly 100 in the placed state is carried by the carrier 37 to be loaded into the vacuum chamber 31 through the inlet 33. With the assembly 100 placed still on the carrier 37 inside the vacuum chamber 31, the door 34 of the inlet 33 and the door 36 of the outlet 35 are closed to seal the vacuum chamber 31 hermetically. In this state, the space inside the vacuum chamber 31 has its pressure reduced to create a reduced pressure space. As used herein, the "reduced pressure space" refers to either a vacuum space or space, of which the pressure has been reduced to a level lower than the atmospheric pressure. In this state, an infrared ray is radiated from each of the infrared light sources 32 toward the assembly 100. At least the peripheral wall 410 is irradiated with the infrared ray. As a result, the peripheral wall 410 is heated and melted. Subsequently, the infrared ray stops being radiated from the infrared light sources 32 to cool the peripheral wall 410. In this manner, the glass panel unit 10 is manufactured. Thereafter, the door 36 of the outlet 35 of the vacuum chamber 31 is opened to have the glass panel unit 10 unloaded through the outlet 35 to the outside of the vacuum chamber 31 using the carrier 37.

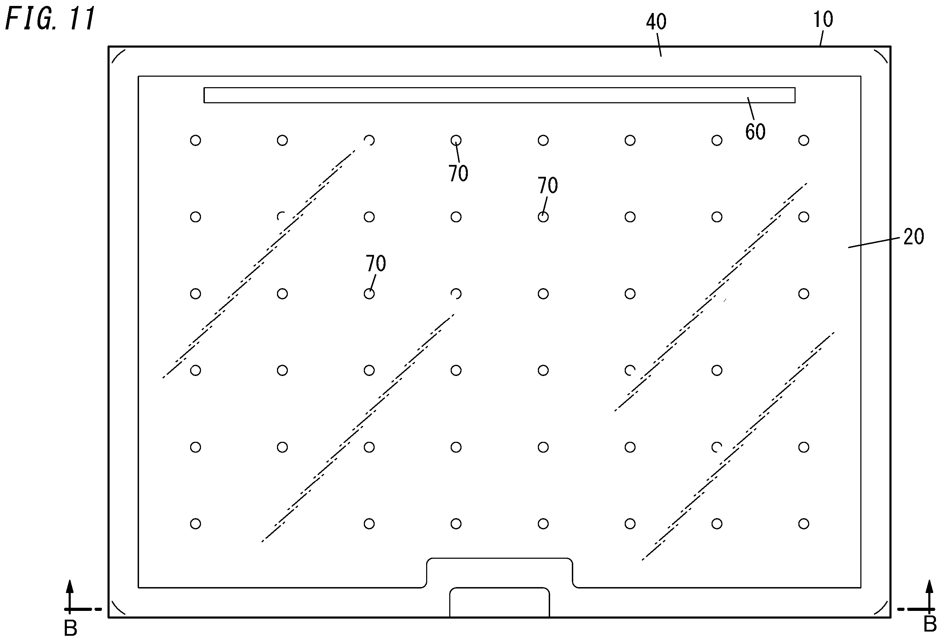

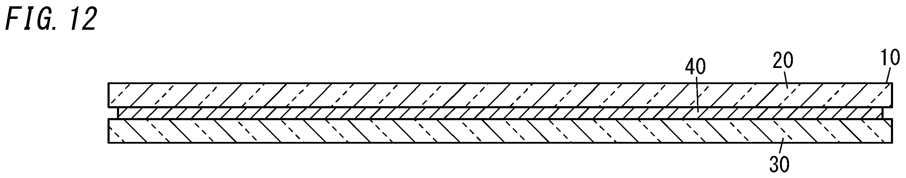

In this bonding process step, the assembly 100 is loaded in the reduced pressure space, thereby causing the gases in the internal space 500 to be exhausted to the outside through the gaps 414 between the main part 411 and the sealing portion 412 of the peripheral wall 410 and through the opening 413 (refer to FIG. 6). In this manner, a reduced pressure condition is created in the vacuum chamber 31. As used herein, the "reduced pressure condition" refers to either a vacuum condition or a condition in which the pressure has been reduced to a level lower than the atmospheric pressure. When the peripheral wall 410 is heated by being irradiated with the infrared ray in this state, the sealant as a constituent material for the peripheral wall 410 either softens or melts. At this time, the clips 1 are placed on the assembly 100, and therefore, compressive force is applied from the first glass pane 200 and the second glass pane 300 to the peripheral wall 410. As a result, the peripheral wall 410 is pressed and expanded, thereby filling and closing the gaps 414 between the main part 411 and the sealing portion 412 of the peripheral wall 410 (refer to FIG. 11). At this time, the gap between the first glass pane 200 and the second glass pane 300 is maintained by the pillars 70. As a result, the internal space 500 is hermetically sealed in the reduced pressure condition. Subsequently, as the peripheral wall 410 is cooled, the sealant is solidified, thereby forming a frame member 40 including the molten and solidified product of the sealant. The first glass pane 200 and the second glass pane 300 are bonded together with this frame member 40. In this manner, the glass panel unit 10 is manufactured (refer to FIGS. 11 and 12). Next, the user widens the gap between the contact portion 6A of the first member 4A and the contact portion 6B of the second member 4B by pinching the two operating portions 72A, 72B of the clip 1 with his or her fingers to remove the clip 1 from the glass panel unit 10.

Particularly if the peripheral wall 410 contains the sealant and the binder while the peripheral wall 410 is being heated in the bonding process step, then the peripheral wall 410 is preferably heated first to a temperature which is lower than the temperature at which the sealant softens or melts and at which the binder is thermally decomposable. Subsequently, the peripheral wall 410 is preferably heated to a temperature higher than the temperature at which the sealant softens or melts, thereby causing the sealant to soften or melt. This allows the binder to be thermally decomposed and removed first from the peripheral wall 410, thus reducing the chances of the binder being left in the internal space 500. In this case, the temperature and duration of heating may be set appropriately according to the respective types of the sealant and the binder and other process conditions.

In this embodiment, in the bonding process step, the linking portion 8A of the first member 4A has the transmitting portion 81A over the outer peripheral edge of the assembly 100 as described above, and the peripheral wall 410 may be irradiated with an infrared ray through the transmitting portion 81A. In addition, the linking portion 8B of the second member 4B has the transmitting portion 81B, through which the peripheral wall 410 may be irradiated with an infrared ray. Furthermore, the contact portion 6A of the action portion 9A of the first member 4A of the clip 1 is in contact with the first outer surface 2A forward of the peripheral wall 410 of the assembly 100 while no parts of the action portion 9A but the contact portion 6A are in contact with the first outer surface 2A. This allows the peripheral wall 410 to be irradiated with the infrared ray through the gap between the first outer surface 2A and the first member 4A. In addition, the contact portion 6B of the action portion 9B of the second member 4B of the clip 1 is in contact with the second outer surface 2B forward of the peripheral wall 410 of the assembly 100 while no parts of the action portion 9B but the contact portion 6B are in contact with the second outer surface 2B. This allows the peripheral wall 410 to be irradiated with the infrared ray through the gap between the second outer surface 2B and the second member 4B. This may reduce the chances of the clip 1 interfering with irradiating the peripheral wall 410 with the infrared ray. This allows for heating the peripheral wall 410 efficiently while reducing the unevenness in the degree of heating of the peripheral wall 410. Consequently, the first glass pane 200 and the second glass pane 300 may be bonded together efficiently. In addition, this may reduce the chances of some parts of the gap between the first glass pane 200 and the second glass pane 300 being closed insufficiently with the frame member 40 formed out of the peripheral wall 410. This may reduce the chances of causing various types of defects, such as a decrease in the mechanical strength of the glass panel unit 10 and failure to maintain the reduced pressure condition in the vacuum space 50 formed out of the internal space 500, to the glass panel unit 10.

In the placed state, the transmitting portion 81A of the first member 4A preferably overlaps with the peripheral wall 410 when viewed perpendicularly to the first outer surface 2A from over the assembly 100 (refer to FIGS. 8 and 9). In particular, as shown in FIG. 9, the transmitting portion 81A preferably overlaps with the peripheral wall 410 such that peripheral wall 410 crosses the transmitting portion 81A. This significantly reduces the chances of irradiation of the peripheral wall 410 with the infrared ray being interfered with.

In the same way, in the placed state, the transmitting portion 81B of the second member 4B preferably overlaps with the peripheral wall 410 when viewed perpendicularly to the second outer surface 2B from under the assembly 100. In particular, the transmitting portion 81B preferably overlaps with the peripheral wall 410 such that peripheral wall 410 crosses the transmitting portion 81B. This significantly reduces the chances of irradiation of the peripheral wall 410 with the infrared ray being interfered with.

Next, a glass panel unit 10 manufactured by the manufacturing method according to this embodiment will be described with reference to FIGS. 11 and 12. The glass panel unit 10 is a vacuum insulated glazing (VIG). The glass panel unit 10 includes: a first glass panel 20 derived from the first glass pane 200; a second glass panel 30 derived from the second glass pane 300; a frame member 40 derived from the peripheral wall 410; and a vacuum space 50 derived from the internal space 500. The glass panel unit 10 further includes the gas adsorbent 60 and the plurality of pillars 70.

The first glass panel 20 has the same shape as the second glass panel 30. Each of the first glass panel 20 and the second glass panel 30 has the shape of a rectangular flat plate. The material for the first glass panel 20 and the second glass panel 30 is the same as the material for the first glass pane 200 and the second glass pane 300. In this embodiment, the first glass panel 20 is the first glass pane 200 itself and the second glass panel 30 is the second glass pane 300 itself.

The frame member 40 is provided between the first glass panel 20 and the second glass panel 30 to hermetically bond the first glass panel 20 and the second glass panel 30 together. The frame member 40 is formed out of the peripheral wall 410 as described above. The frame member 40 has a rectangular frame shape. The frame member 40 is formed along the respective outer peripheries of the first glass pane 200 and the second glass pane 300. Thus, in the glass panel unit 10, a vacuum space 50 surrounded by the frame member 40, the first glass panel 20, and the second glass panel 30 is created. The frame member 40 surrounds the entire outer periphery of the vacuum space 50. In addition, the frame member 40 is in close contact with the first glass panel 20 and the second glass panel 30. Thus, the vacuum space 50 is hermetically sealed. The inside of the vacuum space 50 is in a reduced pressure condition (i.e., either is in a vacuum state or has a pressure lower than the atmospheric pressure).

The gas adsorbent 60 is placed in the vacuum space 50. Specifically, the gas adsorbent 60 has an elongate flat-plate shape and is provided on the second glass pane 300. The gas adsorbent 60 adsorbs unnecessary gases (such as a residual gas) in the vacuum space 50. The gas adsorbent 60 may adsorb the gases emitted from the peripheral wall 410 while the frame member 40 is being formed out of the peripheral wall 410 in the bonding process step, for example.

The plurality of pillars (spacers) 70 are placed in the vacuum space 50. The plurality of pillars 70 may maintain a gap distance between the first glass panel 20 and the second glass panel 30.

### 2. Variations

In the clip 1 according to the exemplary embodiment described above, each of the first member 4A and the second member 4B includes the base portion 7 linked to the elastic mechanism 5 and the action portion 9 linked to the base portion 7, and the action portion 9 includes the contact portion 6 to come into contact with the assembly 100 in the placed state and the linking portion 8 interposed between the contact portion 6 and the base portion 7 which does not come into contact with the assembly 100 in the placed state. Furthermore, in each of the action portion 9A of the first member 4A and the action portion 9B of the second member 4B, the contact portion 6 comes into contact with the assembly 100 only at a position opposite from the outer periphery of the assembly 100 with respect to the peripheral wall 410, and the linking portion 8 includes the transmitting portion 81 having infrared transmittance. However, this is only an example and should not be construed as limiting. Alternatively, in only one of the first member 4A or the second member 4B, the contact portion 6 may come into contact with the assembly 100 only at a position opposite from the outer periphery of the assembly 100 with respect to the peripheral wall 410, and the linking portion 8 may include the transmitting portion 81 having infrared transmittance. Still alternatively, the contact portion 6 may come into contact with the assembly 100 only at a position opposite from the outer periphery of the assembly 100 with respect to the peripheral wall 410 in each of the first member 4A and the second member 4B, and the linking portion 8 may include the transmitting portion 81 having infrared transmittance in only one of the first member 4A or the second member 4B.

In the embodiment described above, the transmitting portion 81 is an opening. However, the transmitting portion 81 does not have to be an opening as long as the transmitting portion 81 has infrared transmittance. Alternatively, the transmitting portion 81 may also be a cutout portion provided for the linking portion 8. Still alternatively, the transmitting portion 81 may also be made of a resin material having infrared transmittance.

The clip 1 according to the exemplary embodiment is formed as a combination of the first member 4A and the second member 4B that are two separate members and includes the elastic mechanism 5 including the torsion coil spring. Alternatively, the first member 4A and the second member 4B may form a single integral member. In addition, the elastic mechanism 5 does not have to include the torsion coil spring as long as the elastic mechanism 5 may apply elastic force to the first member 4A and the second member 4B to clamp the assembly 100.

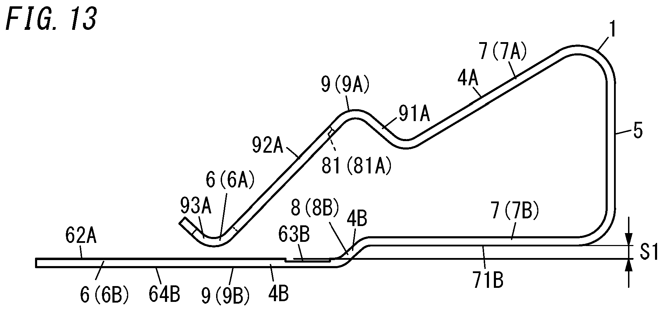

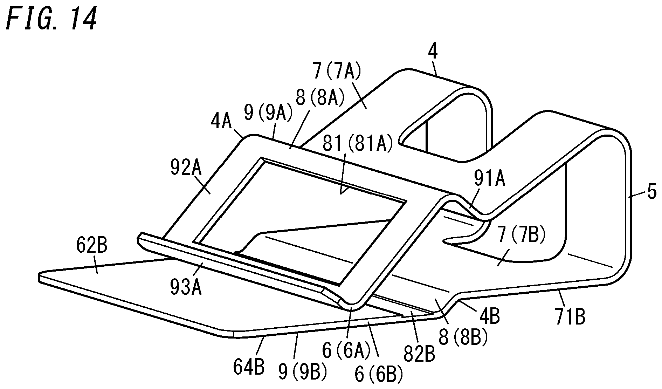

A clip 1 according to a variation is shown in FIGS. 13 and 14. In the following description of the clip 1 according to this variation, the first member 4A is also defined to be located upward of the second member 4B, and the second member 4B is also defined to be located downward of the first member 4A. In addition, in the placed state, the assembly 100 is defined to be located forward of the elastic mechanism 5, and the elastic mechanism 5 is defined to be located backward of the assembly 100. Furthermore, if the upward/downward and forward/backward directions for the observer are supposed to agree with the upward/downward and forward/backward directions in the foregoing description of the clip 1, then the rightward/leftward directions for the observer are defined to be the rightward/leftward directions in the following description of the clip 1. Note that the upward/downward, forward/backward, and rightward/leftward directions are defined as such only for the sake of convenience, not to define the orientation of the clip 1 when the clip 1 is used. Also, in the following description, the structure of the clip 1 to which no external force is applied will be described.

In the clip 1 according to this variation, the first member 4A, the second member 4B, and the elastic mechanism 5 form a single integral member which cannot be separated nondestructively.

The first member 4A includes: a base portion 7A linked to the elastic mechanism 5; and an action portion 9A located forward of the base portion 7A.

The base portion 7A has the shape of a flat plate which slopes down toward the front end thereof.

The action portion 9A includes: a first part 91A extending obliquely forward and upward from the front end of the base portion 7A; a second part 92A extending obliquely forward and downward from the front end of the first part 91A with respect to the first part 91A; and a third part 93A extending obliquely forward and upward from the front end of the second part 92A. Each of the first part 91A, the second part 92A, and the third part 93A has the shape of a flat plate. An angled portion linking the second part 92A to the third part 93A is the contact portion 6A. The combination of the first part 91A and the second part 92A serves as the linking portion 8A. The second part 92A included in the linking portion 8A has an opening serving as the transmitting portion 81A.

The second member 4B of the clip 1 according to this variation has the same configuration as the second member 4B of the clip 1 according to the exemplary embodiment described above except that the second member 4B of the clip 1 according to this variation includes neither the connecting portion 21B nor the transmitting portion 81B. That is to say, the second member 4B includes the action portion 9B including the contact portion 6B having the contact surface 62B and the linking portion 8B having the recessed surface 82B. The contact portion 6B and the linking portion 8B each have the same configuration as their counterpart of the exemplary embodiment described above. In addition, the second member 4B includes the base portion 7B having the same configuration as its counterpart of the exemplary embodiment described above except that the base portion 7B according to this variation includes no connecting portion 21B.

The elastic mechanism 5 has the shape of a flat plate having thickness in the forward/backward direction. The upper end of the elastic mechanism 5 is linked to the rear end of the base portion 7A of the first member 4A. The lower end of the elastic mechanism 5 is linked to the rear end of the base portion 7B of the second member 4B. The base portion 7A of the first member 4A, the elastic mechanism 5, and the base portion 7B of the second member 4B may be formed by subjecting a single metallic plate to machining, for example.

When using the clip 1 according to this variation, the user applies force to the first member 4A and second member 4B of the clip 1 to separate the action portion 9A of the first member 4A and the action portion 9B of the second member 4B from each other. Applying this force causes the clip 1 to be deformed to the point of bringing the action portion 9A of the first member 4A out of contact with the action portion 9B of the second member 4B, thus creating a gap between the contact portion 6A of the first member 4A and the contact portion 6B of the second member 4B. The elastic force produced by the deformation of the clip 1 is applied from the elastic mechanism 5 to the first member 4A and the second member 4B. In this state, the outer peripheral edge of the assembly 100 is inserted into the gap between the action portion 9A of the first member 4A and the action portion 9B of the second member 4B. When the user removes the force that has been applied to the first member 4A and the second member 4B, the elastic force applied by the elastic mechanism 5 brings the action portion 9A of the first member 4A and the action portion 9B of the second member 4B closer to each other. This brings the contact portion 6A of the first member 4A and the contact portion 6B of the second member 4B into contact with the assembly 100. As a result, the assembly 100 is clamped between the contact portion 6A of the first member 4A and the contact portion 6B of the second member 4B. Consequently, the clip 1 is placed on the assembly 100. That is to say, the placed state is established.

In the exemplary embodiment described above, the glass panel unit 10 has a rectangular shape. Alternatively, the glass panel unit 10 may also have a circular, polygonal, or any other desired shape. That is to say, the first glass panel 20, the second glass panel 30, and the frame member 40 do not have to be rectangular but may also have a circular, polygonal, or any other desired shape. Note that the first glass pane 200, the second glass pane 300, the peripheral wall 410, and the partitions 420 do not have to have the shapes exemplified in the exemplary embodiment but may also have any other shapes as long as a glass panel unit 10 having the desired shape may be obtained. It should also be noted that the shape and dimensions of the glass panel unit 10 are determined according to the intended use of the glass panel unit 10.

The first and second glass panes 20, 30 do not have to have the same planar shape and the same planar dimensions. Also, the first glass panel 20 does not have to be as thick as the second glass panel 30, either. Furthermore, the first and second glass panels 20, 30 do not have to be made of the same material. The same statement applies to the first and second glass panes 200, 300 as well.

Also, in the assembly 100, the peripheral wall 410 is just provided between the first and second glass panes 200, 300 and does not bond the first and second glass panes 200, 300 together. Alternatively, however, in the assembly 100 stage, the peripheral wall 410 may bond the first and second glass panes 200, 300 to a certain degree.

In the embodiment described above, the getter material in the gas adsorbent 60 is an evaporative getter material. Alternatively, the getter material may also be a non-evaporative getter material.

In the exemplary embodiment described above, the gas adsorbent 60 has the shape of an elongate flat plate. Alternatively, the gas adsorbent 60 may also have any other shape. In addition, the gas adsorbent 60 does not have to be located at the end of the vacuum space 50. Also, in the exemplary embodiment described above, the gas adsorbent 60 is formed by applying a liquid including a powder of the getter material (such as a dispersion liquid prepared by dispersing a powder of the getter material in a liquid or a solution prepared by dissolving a powder of the getter material in a liquid). Alternatively, the gas adsorbent 60 may include a substrate and a getter material sticking to the substrate. Such a gas adsorbent 60 may be obtained by immersing the substrate in a liquid including a powder of the getter material and drying the substrate. Note that the substrate may have any desired shape and may have an elongate rectangular shape, for example. Still alternatively, the gas adsorbent 60 may also be a membrane formed to cover the surface of the second glass pane 300 either entirely or just partially. Such a gas adsorbent 60 may be obtained by coating the surface of the second glass pane 300 with a liquid containing a powder of the getter material. Yet alternatively, the gas adsorbent 60 may be contained in the pillars 70. For example, forming the pillars 70 out of a material containing the getter material allows the pillars 70 containing the gas adsorbent 60 to be obtained. Yet alternatively, the gas adsorbent 60 may also be a solid made of the getter material.

In the exemplary embodiment described above, a single glass panel unit 10 is formed out of a single assembly 100. Alternatively, multiple glass panel units 10 may also be formed out of a single assembly 100. In that case, a partition, including a sealant as well as the peripheral wall 410, is placed in the internal space 500 to divide the internal space 500 into a plurality of spaces. The partition may have an opening, a sealing portion, and gaps corresponding to, for example, the opening 413, the sealing portion 412, and the gaps 414 of the peripheral wall 410 according to the exemplary embodiment which are formed at respectively appropriate positions, thereby allowing the gas to circulate between the multiple spaces inside the internal space 500. The bonding process step includes exhausting the gas from the multiple spaces inside the internal space 500 through the gaps and opening of the partition and the gaps 414 and opening 413 of the peripheral wall 410, thereby producing a reduced pressure condition in the respective spaces. In that state, the partition and the peripheral wall 410 are allowed to be melted and solidified. At this time, the gaps of the partition are also closed as in the case of the peripheral wall 410. As a result, the vacuum space 50 is created inside the molten and solidified product of the peripheral wall 410, and the vacuum space 50 is divided by a boundary wall, which is a molten and solidified product of the partition, into multiple spaces. In this manner, a work in progress is obtained. A plurality of glass panel units 10 may be obtained by cutting off the work in progress along the boundary wall.

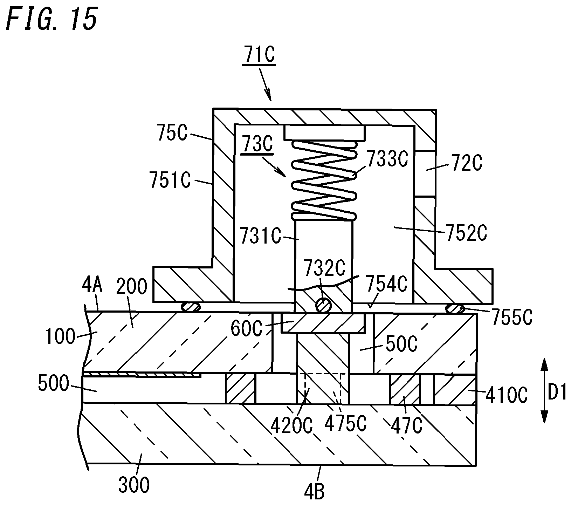

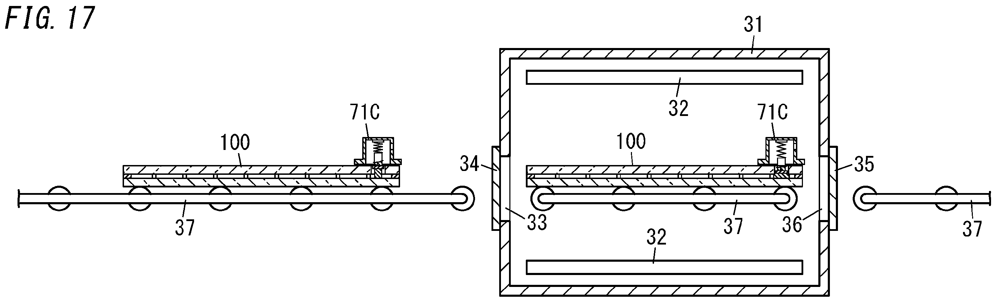

In the exemplary embodiment described above, the gas is exhausted from the internal space 500 through the gaps 414 and opening 413 of the peripheral wall 410. Alternatively, the gas may also be exhausted from the internal space 500 by any other method. For example, as in the variation illustrated in FIGS. 15, 16, and 17, either or each of the first glass pane 200 and the second glass pane 300 may have an evacuation port 50C. The bonding process step may include exhausting the gas from the internal space 500 through the evacuation port 50C to create a reduced pressure condition in the internal space 500. Subsequently, the first glass pane 200 and the second glass pane 300 may be bonded together with the peripheral wall 410 and the evacuation port 50C may be sealed by irradiating the peripheral wall 410 with an infrared ray while the reduced pressure condition is created in the internal space 500.

In the variation illustrated in FIGS. 15, 16, and 17, the gas is exhausted from the internal space 500 through the evacuation port 50C using a jig used for evacuation and sealing purposes, and then the evacuation port 50C is sealed. This jig includes: a pressure reducing mechanism 71C including an exhaust head 75C to be pressed against the assembly 100; and a pressing mechanism 73C installed in the exhaust head 75C.

The evacuation port 50C is provided through the first glass pane 200. The evacuation port 50C penetrates through the first glass pane 200 in the thickness direction to allow the internal space 500 to communicate with the outside of the assembly 100. In the internal space 500, a dam member 47C is arranged to surround the evacuation port 50C. The dam member 47C may be made of a glass frit, for example. The dam member 47C may be made of the same material as the peripheral wall 410, for example. The dam member 47C has a partially cut out shape. Through the cutout portion, the inside and outside of the dam member 47C communicate with each other in the internal space 500. Optionally, the dam member 47C may be omitted.

The exhaust head 75C has an opening 72C which allows the evacuation port 50C of the assembly 100 to communicate with the outside of the assembly 100. The exhaust head 75C is configured such that the gas is exhausted from the internal space 500 to the outside of the assembly 100 through the evacuation port 50C and the opening 72C. The exhaust head 75C includes a head body 751C having the shape of a bottomed cylinder and the opening 72C that allows the inside of the head body 751C to communicate with the outside of the assembly 100. The head body 751C has a space 752C created inside the head body 751C and an opening 754C exposing the space 752C to the outside. An O-ring 755C having elasticity is disposed on a part of the head body 751C which surrounds the opening 754C.

The pressing mechanism 73C includes a holder 731C having a block shape and a spring 733C coupling the holder 731C to an inner bottom surface of the head body 751C. The spring 733C is located inside the space 752C. The pressing mechanism 73C is configured to press a sealing portion 420C, which is inserted into the evacuation port 50C, against the second glass pane 300 with the pressure reduced in the internal space 500. Note that the pressing mechanism 73C does not have to have this configuration as long as the pressing mechanism 73C may press the sealing portion 420C against the second glass pane 300.

The jig used for evacuation and sealing purposes may be mounted onto the assembly 100 either before or after the placing process step, whichever is appropriate.

When the jig is mounted, first, the assembly 100 is placed such that the evacuation port 50C is opened upward (i.e., such that the first glass pane 200 is located upward of the second glass pane 300). The exhaust head 75C is placed over the evacuation port 50C such that the opening 754C faces downward. The holder 731C is located over the evacuation port 50C.

At this time, the sealing portion 420C and a pressing member 60C have been inserted into the evacuation port 50C of the assembly 100. The sealing portion 420C contains a solid sealant such as a glass frit. The temperature at which the sealant contained in the sealing portion 420C softens or melts is preferably either equal to, or somewhat higher than, the temperature at which the sealant as a constituent material for the peripheral wall 410 softens or melts. The pressing member 60C may be made of a metal, for example.

The sealing portion 420C and the pressing member 60C each have an outer diameter smaller than the diameter of the evacuation port 50C. The pressing member 60C has a larger outer diameter than the sealing portion 420C does. The pressing member 60C inserted into the evacuation port 50C is located opposite from the second glass pane 300 with the sealing portion 420C. interposed between them.

Next, as shown in FIG. 15, the exhaust head 75C is lowered to press the lower surface of the holder 731C against the upper surface of the pressing member 60C. The O-ring 755C of the exhaust head 75C is hermetically pressed against a part of the upper surface of the first glass pane 200 which surrounds the evacuation port 50C entirely.

Interposing the O-ring 755C, which has been deformed elastically under the pressing force applied by the head body 751C, between the first glass pane 200 and the head body 751C reduces the chances of the first glass pane 200 being scratched due to the contact between the first glass pane 200 and the head body 751C.

At this time, the sealing portion 420C and the pressing member 60C mounted on the sealing portion 420C are vertically clamped between the second glass pane 300 and the holder 731C under the biasing force (i.e., force of restitution) applied by the spring 733C. In the bonding process step, the pressing mechanism 73C serves as a holding mechanism for elastically holding the sealing portion 420C inserted into the evacuation port 50C.

The assembly 100 in the placed state, to which the jig is mounted, is also carried, as in the exemplary embodiment described above, by the carrier 37 in the bonding process step to be loaded into a vacuum chamber 31. In the bonding process step, when the pressure inside the vacuum chamber 31 is reduced to create a reduced pressure space inside the vacuum chamber 31, the gas is exhausted from the space 752C inside the head body 751C through the opening 72C. Although the sealing portion 420C and the pressing member 60C are inserted into the evacuation port 50C, a gap is left between the inner peripheral surface of the evacuation port 50C and the sealing portion 420C, a gap is also left between the evacuation port 50C and the pressing member 60C, and these two gaps communicate with each other. Consequently, the gas is exhausted from the internal space 500 through the evacuation port 50C of the first glass pane 200 and the cutout 475C of the dam member 47C placed inside the internal space 500.

When the peripheral wall 410 is irradiated with an infrared ray by the infrared light source 32 to be heated with the pressure reduced in the internal space 500, the sealing portion 420C inserted into the evacuation port 50C is also irradiated with the infrared ray by the infrared light source 32 to be heated. The sealing portion 420C thus heated is caused to melt and soften. The sealing portion 420C thus softened is pressed toward the second glass pane 300 and deformed under the biasing force (elastic force) applied by the spring 733C of the pressing mechanism 73C via the pressing member 60C. The sealing portion 420C is pressed and expanded in a direction perpendicular to the thickness direction D1 to be deformed to the point that the sealing portion 420C comes into contact with the inner peripheral surface of the dam member 47C in the internal space 500. Bringing the sealing portion 420C into contact with the dam member 47C reduces further expansion of the sealing portion 420C. The cutout of the dam member 47C is sealed by the sealing portion 420C that has been pressed and expanded to the point of coming into contact with the dam member 47C. As a result, the evacuation port 50C is closed.

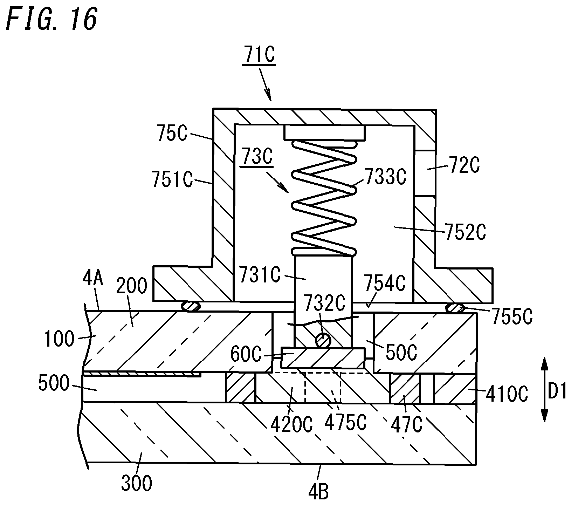

At this stage, the evacuation port 50C is sealed by the sealing portion 420C and the internal space 500 is hermetically sealed while maintaining the reduced pressure condition. As shown in FIG. 16, the sealing portion 420C is bonded in the internal space 500 to not only both the first glass pane 200 and the second glass pane 300 but also the pressing member 60C as well.

Even when the partition is provided for the assembly 100 to form a plurality of glass panel units 10 out of the assembly 100, either or each of the first glass pane 200 and the second glass pane 300 may have the evacuation port 50C with neither the gaps 414 of the peripheral wall 410 nor the gaps of the partition left. In that case, the bonding process step may include exhausting the gas from the internal space 500 through the evacuation port 50C to create a reduced pressure condition in the internal space 500. Subsequently, with the reduced pressure condition created in the internal space 500, the peripheral wall 410 may be irradiated with the infrared ray to bond the first glass pane 200 and the second glass pane 300 together with the peripheral wall 410 and seal the evacuation port 50C. In that case, either or each of the first glass pane 200 and the second glass pane 300 is provided with a plurality of evacuation ports 50C respectively communicating with the plurality of spaces inside the internal space 500. The jig used for evacuation and sealing purposes is mounted onto each of these evacuation ports 50C. The gas is exhausted from the internal space 500 through the evacuation ports 50C using such jigs in the bonding process step and then the evacuation ports 50C may be sealed as in the variation illustrated in FIGS. 15, 16, and 17.

In the exemplary embodiment described above, the bonding process step includes heating the peripheral wall 410 only by irradiating the peripheral wall 410 with an infrared ray. Alternatively, the peripheral wall 410 may also be heated by using, in combination, irradiation of the peripheral wall 410 with an infrared ray and another type of heating method without using the infrared ray. Examples of other types of heating methods without using the infrared ray include loading the assembly 100 into an atmosphere which has been heated using, for example, an electric heater 42. However, this is only an example and should not be construed as limiting.

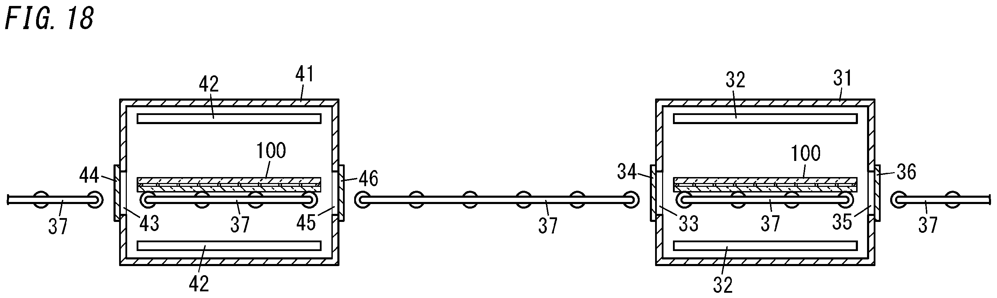

For example, in a variation illustrated in FIG. 18, the bonding process step includes, first, loading the assembly 100 into an atmosphere which has been heated by an electric heater 42 with no reduced pressure condition created in the internal space 500, thereby heating the peripheral wall 410. This heating process step will be hereinafter referred to as a "primary heating process step." Subsequently, with the reduced pressure condition created in the internal space 500, the peripheral wall 410 is heated by irradiating the peripheral wall 410 with an infrared ray. This heating process step will be hereinafter referred to as a "secondary heating process step." In the primary heating process step, if the peripheral wall 410 contains a sealant and a binder, for example, the peripheral wall 410 is heated to such a temperature at which the binder is thermally decomposable, thereby thermally decomposing the binder in the peripheral wall 410. Subsequently, in the secondary heating process step, the peripheral wall 410 may be heated to a temperature higher than the temperature at which the sealant softens or melts, thereby causing the sealant to soften or melt. This allows the binder to be thermally decomposed and removed first from the peripheral wall 410, thus reducing the chances of the binder being left in the internal space 500. In that case, the temperature and duration of heating in each of the primary heating process step and the secondary heating process step may be set appropriately according to the respective types of the sealant and the binder and other conditions.

The variation illustrated in FIG. 18 will be described in further detail. FIG. 18 illustrates heating equipment for use in the bonding process step according to this variation. This heating equipment includes an electric heating device, an infrared heating device, and carriers 37.

The electric heating device includes a chamber 41 and electric heaters 42 installed inside the chamber 41. The chamber 41 includes an inlet 43, an outlet 45, a door 44 for opening and closing the inlet 43, and a door 46 for opening and closing the outlet 45. Inside the chamber 41, installed is a carrier 37 for supporting and carrying the assembly 100 between the inlet 43 and the outlet 45. For example, two electric heaters 42 may be respectively installed over and under the carrier 37 inside the chamber 41. The electric heating device further includes an air circulator (not shown), which may make the temperature inside the chamber 41 uniform by circulating the air inside the chamber 41.

The infrared heating device has the same configuration as the infrared heating device shown in FIG. 10. The infrared heating device includes a vacuum chamber 31 and an infrared light source installed in the vacuum chamber 31. The vacuum chamber 31 includes an inlet 33, an outlet 35, a door 34 for opening and closing the inlet 33, and a door 36 for opening and closing the outlet 35. Inside the vacuum chamber 31, installed is a carrier 37 for supporting and carrying the assembly 100 between the inlet 33 and the outlet 35.

In addition, three other carriers 37 for carrying the assembly 100 are respectively installed outside the inlet 43 of the chamber 41, between the outlet 45 of the chamber 41 and the inlet 33 of the vacuum chamber 31, and outside the outlet 35 of the vacuum chamber 31.

Each of these carriers 37 may be a roller conveyor, for example. However, this is only an example and should not be construed as limiting.

In the bonding process step according to this variation, first, the assembly 100 in the placed state is carried by the carrier 37 to be loaded into the chamber 41 of the electric heating device through the inlet 43 with the door 44 of the inlet 43 of the chamber 41 opened. With the assembly 100 placed still on the carrier 37 inside the chamber 41, the door 44 of the inlet 43 and the door 46 of the outlet 45 are closed, thereby sealing the chamber 41 hermetically. In this state, with the atmosphere at the atmospheric pressure maintained in the space inside the chamber 41, the atmosphere inside the chamber 41 is heated by the electric heaters 42 to such a temperature higher than the temperature at which the sealant in the peripheral wall 410 softens or melts that does not cause the peripheral wall 410 to be deformed to the point of closing the gaps 414 shown in FIG. 6. In this manner, the peripheral wall 410 is heated, thereby thermally decomposing the binder contained in the peripheral wall 410 with the gaps still left and melting the peripheral wall 410 to bond the first glass pane 200 and the second glass pane 300 together with the peripheral wall 410. Subsequently, the door 46 of the outlet 45 of the chamber 41 is opened to carry, using the carrier 37, the assembly 100 toward the vacuum chamber 31 of the infrared heating device.

Subsequently, with the door 34 of the inlet 33 of the vacuum chamber 31 of the infrared heating device opened, the assembly 100 is carried by the carrier 37 to be loaded into the vacuum chamber 31 through the inlet 33. With the assembly 100 placed still on the carrier 37 inside the vacuum chamber 31, the door 34 of the inlet 33 and the door 36 of the outlet 35 are closed, thereby sealing the vacuum chamber 31 hermetically. In this state, the pressure in the space inside the vacuum chamber 31 is reduced to create a reduced pressure space. In this state, an infrared ray is radiated from each of the infrared light sources 32 toward the assembly 100. At least the peripheral wall 410 is irradiated with the infrared ray. As a result, the peripheral wall 410 is heated again and melted, and pressed and expanded, thereby filling and closing the gaps 414 between the main part 411 and the sealing portion 412 of the peripheral wall 410 (refer to FIG. 11). Subsequently, the infrared ray stops being radiated from the infrared light sources 32 to cool the peripheral wall 410. In this manner, the glass panel unit 10 is manufactured. Thereafter, the door 36 of the outlet 35 of the vacuum chamber 31 is opened to have the glass panel unit 10 unloaded through the outlet 35 to the outside of the vacuum chamber 31 using the carrier 37.

In the variation illustrated in FIG. 18, either or each of the first glass pane 200 and the second glass pane 300 may have the evacuation port 50C. In that case, the bonding process step may include exhausting the gas from the internal space 500 through the evacuation port 50C to create a reduced pressure condition in the internal space 500. Subsequently, with the reduced pressure condition created in the internal space 500, the peripheral wall 410 may be irradiated with the infrared ray to bond the first glass pane 200 and the second glass pane 300 together with the peripheral wall 410 and seal the evacuation port 50C.

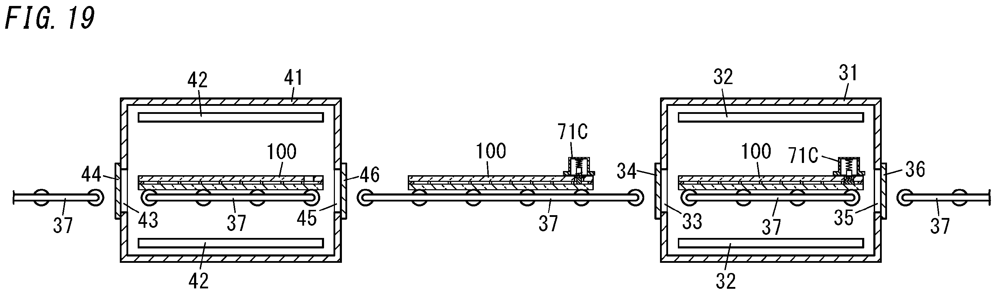

In the variation illustrated in FIG. 19, either or each of the first glass pane 200 and the second glass pane 300 has the evacuation port 50C. The bonding process step includes, first, loading the assembly 100 into an atmosphere which has been heated by electric heaters 42 with no reduced pressure condition created in the internal space 500, thereby heating the peripheral wall 410. This heating process step will be hereinafter referred to as a "primary heating process step." Subsequently, with the reduced pressure condition created in the internal space 500 by exhausting the gas from the internal space 500 through the evacuation port 50C, the peripheral wall 410 is heated by irradiating the peripheral wall 410 with an infrared ray. This heating process step will be hereinafter referred to as a "secondary heating process step." In the primary heating process step, if the peripheral wall 410 contains a sealant and a binder, for example, the peripheral wall 410 is heated to such a temperature higher than the temperature at which the sealant softens or melts, thereby thermally decomposing the binder in the peripheral wall 410 and bonding the first glass pane 200 and the second glass pane 300 together with the peripheral wall 410. Subsequently, in the secondary heating process step, the peripheral wall 410 may be heated to a temperature at which the sealing portion 420C inserted into the evacuation port 50C softens or melts, for example.

The variation illustrated in FIG. 19 will be described in further detail. FIG. 19 illustrates heating equipment for use in the bonding process step according to this variation. This heating equipment includes an electric heating device, an infrared heating device, and carriers 37. The heating equipment has the same configuration as the counterpart according to the variation shown in FIG. 18.

In this variation, before the bonding process step is performed, the clips 1 are placed on the assembly 100 to establish the placed state.

Next, in the bonding process step, first, the assembly 100 in the placed state is carried by the carrier 37 to be loaded into the chamber 41 of the electric heating device through the inlet 43 with the door 44 of the inlet 43 of the chamber 41 opened. With the assembly 100 placed still on the carrier 37 inside the chamber 41, the door 44 of the inlet 43 and the door 46 of the outlet 45 are closed, thereby sealing the chamber 41 hermetically. In this state, with the atmosphere at the atmospheric pressure maintained in the space inside the chamber 41, the atmosphere inside the chamber 41 is heated by the electric heaters 42. In this manner, the peripheral wall 410 is heated, thereby thermally decomposing the binder contained in the peripheral wall 410. Subsequently, the door 46 of the outlet 45 of the chamber 41 is opened to carry, using the carrier 37, the assembly 100 toward the infrared heating device. At this stage, the sealing portion 420C is inserted into the evacuation port 50C and the jigs used for evacuation and sealing purposes, each having the configuration shown in FIG. 15, are mounted onto the assembly 100. The sealant contained in the sealing portion 420C may be a sealant which either softens or melts at a temperature lower than the temperature at which the sealant contained in the peripheral wall 410 softens or melts.

Subsequently, with the door 34 of the inlet 33 of the vacuum chamber 31 of the infrared heating device opened, the assembly 100 is carried by the carrier 37 to be loaded into the vacuum chamber 31 through the inlet 33. With the assembly 100 placed still on the carrier 37 inside the vacuum chamber 31, the door 34 of the inlet 33 and the door 36 of the outlet 35 are closed, thereby sealing the vacuum chamber 31 hermetically. In this state, the space inside the vacuum chamber 31 is evacuated to create a reduced pressure space. In this state, an infrared ray is radiated from each of the infrared light sources 32 toward the assembly 100. At least the jigs used for evacuation and sealing purposes are irradiated with the infrared ray. As a result, the sealant contained in the sealing portion 420C is heated and melted, thereby closing the evacuation port 50C as described above (refer to FIG. 16).

Subsequently, the infrared ray stops being radiated from the infrared light sources 32 to cool the sealing portion 420C. In this manner, the glass panel unit 10 is manufactured. Thereafter, the door 36 of the outlet 35 of the vacuum chamber 31 is opened to have the glass panel unit 10 unloaded through the outlet 35 to the outside of the vacuum chamber 31 using the carrier 37.

### 3. Aspects

A method for manufacturing a glass panel unit (10) according to a first aspect includes providing an assembly (100). The assembly (100) includes: a first glass pane (200); a second glass pane (300) facing the first glass pane (200); and a peripheral wall (410) interposed between the first glass pane (200) and the second glass pane (300) which contains a thermally meltable sealant disposed in a frame shape along respective outer peripheries of the first glass pane (200) and the second glass pane (300). The first glass pane (200) has a first outer surface (2A) facing away from the second glass pane (300). The second glass pane (300) has a second outer surface (2B) facing away from the first glass pane (200). The method further includes placing a plurality of clips (1) along an outer peripheral edge of the assembly (100) to cause each of the plurality of clips (1) to clamp the assembly (100). The method further includes bonding the first glass pane (200) and the second glass pane (300) together with the peripheral wall (410) by irradiating the peripheral wall (410) with an infrared ray. Each of the plurality of clips (1) includes a first member (4A), a second member (4B), and an elastic mechanism (5). The assembly (100) is clamped, in a placed state where the plurality of clips (1) are placed on the assembly (100), between the first member (4A) and the second member (4B) such that the first member (4A) is brought into contact with the first outer surface (2A) and that the second member (4B) is brought into contact with the second outer surface (2B). The elastic mechanism (5) applies elastic force to the first member (4A) and the second member (4B) to clamp the assembly (100). Each of the first member (4A) and the second member (4B) has: a base portion (7) linked to the elastic mechanism (5); and an action portion (9) linked to the base portion (7). The action portion (9) includes: a contact portion (6) coming into contact with the assembly (100) in the placed state; and a linking portion (8) keeping out of contact with the assembly (100) in the placed state and interposed between the contact portion (6) and the base portion (7). In either the action portion (9) of the first member (4A) or the action portion (9) of the second member (4B) or each of the respective action portions (9) of the first and second members (4A, 4B), the contact portion (6) comes into contact with the assembly (100) only at a position opposite from an outer periphery of the assembly (100) with respect to the peripheral wall (410) and the linking portion (8) includes a transmitting portion (81) having infrared transmittance.

This aspect may reduce the chances of causing a bonding failure during a manufacturing process of a glass panel unit (10) when bonding a first glass pane (200) and a second glass pane (300) together by irradiating a thermally meltable peripheral wall (410) with an infrared ray with clips (1) placed on an assembly (100) including the two glass panes and the peripheral wall (410).

In a second aspect, which may be implemented in conjunction with the first aspect, in each of the action portion (9A) of the first member (4A) and the action portion (9B) of the second member (4B), the contact portion (6) comes into contact with the assembly (100) only at the position opposite from the outer periphery of the assembly (100) with respect to the peripheral wall (410) and the linking portion (8) includes the transmitting portion (81) having infrared transmittance.

This aspect may further reduce the chances of causing a bonding failure during the manufacturing process of a glass panel unit (10) when bonding a first glass pane (200) and a second glass pane (300) together by irradiating a thermally meltable peripheral wall (410) with an infrared ray with clips (1) placed on an assembly (100) including the two glass panes and the peripheral wall (410).

In a third aspect, which may be implemented in conjunction with the first or second aspect, the transmitting portion (81) is either a cutout or an opening provided through the linking portion (8).

This aspect may further reduce the chances of causing a bonding failure during the manufacturing process of a glass panel unit (10) when bonding a first glass pane (200) and a second glass pane (300) together by irradiating a thermally meltable peripheral wall (410) with an infrared ray with clips (1) placed on an assembly (100) including the two glass panes and the peripheral wall (410).

In a fourth aspect, which may be implemented in conjunction with any one of the first to third aspects, the method includes: creating a reduced pressure condition in an internal space (500) surrounded by the peripheral wall (410), the first glass pane (200), and the second glass pane (300) by placing the assembly (100) in a reduced pressure space; and bonding the first glass pane (200) and the second glass pane (300) together with the peripheral wall (410) by irradiating the peripheral wall (410) with an infrared ray while the reduced pressure condition is created in the internal space (500).

According to this aspect, a glass panel unit (10) having a vacuum space (50) inside may be manufactured.

In a fifth aspect, which may be implemented in conjunction with any one of the first to third aspects, either the first glass pane (200) or the second glass pane (300) or each of the first and second glass panes (200, 300) has an evacuation port (50C). The method includes: creating the reduced pressure condition in the internal space (500) by exhausting, through the evacuation port (50C), a gas in the internal space (500) surrounded by the peripheral wall (410), the first glass pane (200), and the second glass pane (300); and sealing the evacuation port (50C) by irradiating, with an infrared ray, a sealing portion (420C) containing a thermally meltable sealant which is inserted into the evacuation port (50C) with a reduced pressure condition created in the internal space (500).

According to this aspect, a glass panel unit (10) having a vacuum space (50) inside may be manufactured.

### Reference Signs List

- 1: Clip
- 2A: First Outer Surface
- 2B: Second Outer Surface
- 4A: First Member
- 4B: Second Member
- 5: Elastic Mechanism
- 6: Contact Portion
- 6A: Contact Portion
- 6B: Contact Portion
- 7: Base Portion
- 7A: Base Portion
- 7B: Base Portion
- 8: Linking Portion
- 8A: Linking Portion
- 8B: Linking Portion
- 81: Transmitting Portion
- 81A: Transmitting Portion
- 81B: Transmitting Portion
- 10: Glass Panel Unit
- 100: Assembly
- 200: First Glass Pane
- 300: Second Glass Pane
- 410: Peripheral Wall
- 420C: Sealing Portion
- 500: Internal Space
- 50C: Evacuation Port

## Claims

1. A method for manufacturing a glass panel unit, the method comprising:
providing an assembly, the assembly including: a first glass pane; a second glass pane facing the first glass pane; and a peripheral wall interposed between the first glass pane and the second glass pane which contains a thermally meltable sealant disposed in a frame shape along respective outer peripheries of the first glass pane and the second glass pane, the first glass pane having a first outer surface facing away from the second glass pane, the second glass pane having a second outer surface facing away from the first glass pane;
placing a plurality of clips along an outer peripheral edge of the assembly to cause each of the plurality of clips to clamp the assembly; and
bonding the first glass pane and the second glass pane together with the peripheral wall by irradiating the peripheral wall with an infrared ray,
each of the plurality of clips including a first member, a second member, and an elastic mechanism,
the assembly being clamped, in a placed state where the plurality of clips are placed on the assembly, between the first member and the second member such that the first member is brought into contact with the first outer surface and that the second member is brought into contact with the second outer surface,
the elastic mechanism being configured to apply elastic force to the first member and the second member to clamp the assembly,
each of the first member and the second member having: a base portion linked to the elastic mechanism; and an action portion linked to the base portion, the action portion including: a contact portion configured to come into contact with the assembly in the placed state; and a linking portion configured to keep out of contact with the assembly in the placed state and interposed between the contact portion and the base portion, and
the contact portion configured to come into contact with the assembly only at a position opposite from an outer periphery of the assembly with respect to the peripheral wall, and the linking portion including a transmitting portion having infrared transmittance in either the action portion of the first member or the action portion of the second member or each of the respective action portions of the first and second members.

2. The method of claim 1, wherein
in each of the action portion of the first member and the action portion of the second member, the contact portion is configured to come into contact with the assembly only at the position opposite from an outer periphery of the assembly with respect to the peripheral wall and the linking portion includes the transmitting portion having infrared transmittance.

3. The method of claim 1 or 2, wherein
the transmitting portion is either a cutout or an opening provided through the linking portion.

4. The method of any one of claims 1 to 3, comprising:
creating a reduced pressure condition in an internal space surrounded by the peripheral wall, the first glass pane, and the second glass pane by placing the assembly in a reduced pressure space; and
bonding the first glass pane and the second glass pane together with the peripheral wall by irradiating the peripheral wall with an infrared ray while the reduced pressure condition is created in the internal space.

5. The method of any one of claims 1 to 3, wherein
either the first glass pane or the second glass pane or each of the first and second glass panes has an evacuation port,
the method comprises:
creating the reduced pressure condition in the internal space by exhausting, through the evacuation port, a gas in the internal space surrounded by the peripheral wall, the first glass pane, and the second glass pane; and
sealing the evacuation port by irradiating, with an infrared ray, a sealing portion containing a thermally meltable sealant which is inserted into the evacuation port with a reduced pressure condition created in the internal space.
